# DEMANDE DE BREVET EUROPEEN

(11) **EP 4 678 960 A1**
(43) Date de publication de la demande: **14.01.2026**
(21) Numéro de dépôt: 25188658.6
(22) Date de dépôt: 10.07.2025
(51) Int. Cl.: F16K 3/22, F16K 3/24, F16K 5/04, F16K 11/076, F16K 11/085

(54) **VANNE MULTIVOIES POUR UN SYSTÈME DE GESTION D'UN FLUIDE SOUS PRESSION ET SYSTÈME DE GESTION D'UN FLUIDE SOUS PRESSION**

(30) Priorité: 11.07.2024 FR 2407590
(71) Demandeur: LE JOINT FRANÇAIS SNC, 75008 Paris (FR)
(72) Inventeur: RICOUSSE, Erwan, 56520 GUIDEL (FR); LAFABRIE, Bryann, 22400 SAINT ALBAN (FR); FARIBAULT, Yannick, 22520 BINIC (FR)
(74) Mandataire: Gevers & Orès

(57) **Abrégé**

L'invention concerne une vanne multivoies (1) pour un système de gestion d'un fluide sous pression, ladite vanne multivoies (1) comprenant :
- un distributeur, une zone d'interconnexion pour les conduites, un boisseau (7) placé dans la zone d'interconnexion et apte à tourner autour d'un axe central pour empêcher ou autoriser la circulation du fluide dans les conduites, et un chemin (8) de passage pour le fluide,
- un joint d'étanchéité, interposé radialement entre le pourtour périphérique (6) et le boisseau (7), comportant au moins un siège (12) de joint, au moins une membrane (14) déformable, et au moins une ouverture centrale traversant le siège (12) de joint et la membrane déformable, la membrane déformable comportant une portion support (15) fixée au siège de joint et deux lèvres (16a, 16b) liées entre elles au niveau d'une jonction (14a) située au niveau d'un plan transversal, chaque lèvre (16a, 16b) étant agencée par rapport à la portion support (15) de sorte à respectivement former une concavité (17a, 17b).

## Description

### Domaine technique de l'invention

L'invention concerne une vanne multivoies munie d'un boisseau et d'un joint d'étanchéité pour un usage dans un système de gestion d'un fluide sous pression. Selon cet usage spécifique, le joint d'étanchéité est agencé de manière appropriée dans le système de gestion du fluide pour réaliser l'étanchéité de différentes conduites dudit système de gestion du fluide. L'invention concerne en outre un système de gestion de fluide équipé de ladite vanne multivoies.

L'invention trouve application dans des systèmes de gestion du fluide tels que les modules de gestion thermique d'un fluide de refroidissement, ceci pour tous types de véhicules, mais pas seulement. En effet, l'invention trouve également application dans des systèmes de gestion de fluide utilisés dans les machines permettant la mise en œuvre de procédés industriels et de techniques avancées de gestion des fluides.

### Arrière-plan technique

Les systèmes de gestion d'un fluide sont utilisés pour répartir un fluide entre différents circuits de fluide. De tels systèmes sont particulièrement utiles, voire nécessaires, lorsque le fluide doit être réparti dans au moins deux voies et/ou circuits de fluide différents. Un système de gestion de fluide comprend classiquement un distributeur comportant un corps formant une pluralité de conduites d'écoulement du fluide, une zone d'interconnexion au niveau de laquelle lesdites conduites se rejoignent, la zone d'interconnexion étant délimitée par un pourtour périphérique et présentant un axe central, et un boisseau apte à tourner autour de l'axe central pour empêcher ou autoriser la circulation du fluide dans les conduites. Le boisseau, qui s'étend généralement depuis la zone d'interconnexion, est séparé du pourtour périphérique par un chemin de passage pour le fluide. Il est nécessaire de prévoir des moyens pour obturer les accès aux conduites selon le(s) circuit(s) qui doit(vent) être alimenté(s) en fluide depuis le chemin de passage.

À cet égard, des joints d'étanchéité peuvent être disposés de manière appropriée au niveau des conduites afin de permettre une fermeture étanche de ces conduites. Les joints d'étanchéité sont, plus précisément, interposés entre le boisseau et le pourtour périphérique de sorte à créer un contact étanche avec le pourtour périphérique lorsque le boisseau exerce une pression sur eux. On distingue trois catégories de joints d'étanchéité dans l'art antérieur, tous bifaciaux, c'est-à-dire comprenant deux faces opposées.

Selon une première configuration, le joint d'étanchéité est composé de deux pièces. La première pièce est une pièce en caoutchouc recouverte, sur l'une de ses faces, d'un film en élastomère tandis que la deuxième pièce, distincte de la première pièce, est faite d'un métal qui lui permet de fonctionner comme un ressort. Cette solution est onéreuse puisqu'elle requiert l'utilisation d'une pièce en métal en plus de la pièce en caoutchouc. En outre, l'assemblage d'un tel joint d'étanchéité est complexe puisqu'il faut s'assurer que la première pièce et la deuxième pièce sont correctement positionnées l'une par rapport à l'autre afin qu'elles demeurent assemblées et alignées après leur montage dans le système de gestion de fluide.

Selon une deuxième configuration, le joint d'étanchéité est composé d'une pièce unique faite en caoutchouc. Cependant avec une telle solution, le couple de rotation du boisseau est élevé et le joint ne permet pas de limiter suffisamment le couple de rotation du boisseau, si bien que le joint d'étanchéité peut être amené à se déplacer à cause des mouvements du boisseau et, subséquemment, ne plus assurer l'étanchéité de la conduite où il a été installé.

Selon une troisième configuration, le joint d'étanchéité est composé d'une pièce unique faite en caoutchouc et recouverte, sur l'une de ses faces, d'un film en PTFE. Bien qu'un tel joint d'étanchéité soit moins sensible au couple de rotation du boisseau, il demeure peu efficace pour limiter le couple de rotation du boisseau et risque de se déplacer avec les mouvements successifs du boisseau. En outre, il exerce une compression axiale plus élevée que le joint d'étanchéité, tel que précédemment décrit, qui est intégralement en caoutchouc.

Les joints d'étanchéité selon les configurations précitées sont très sensibles à la pression du fluide. En effet, selon l'application envisagée, le fluide peut se déployer dans le circuit de fluide avec une pression allant jusqu'à 5 bars.

Les documents US 2022/025976 A1, US 2023/279954 A1, WO 2021/013340 A1, CN 118 176 377 A divulguent chacun une vanne multivoies.

L'invention vise à surmonter au moins une partie des problèmes précités et propose, à cet égard, une solution dans laquelle le joint d'étanchéité limite davantage le couple de rotation du boisseau et présente une meilleure réponse à la pression exercée par le fluide circulant dans le circuit de fluide en termes d'étanchéité.

### Résumé de l'invention

L'invention propose à cet effet une vanne multivoies comprenant :
- un distributeur comportant un corps avec une pluralité de conduites d'écoulement du fluide, une zone d'interconnexion pour lesdites conduites, munie d'un axe central, comportant un pourtour périphérique, et un boisseau, placé dans la zone d'interconnexion de sorte qu'une surface radialement externe dudit boisseau soit séparée du pourtour périphérique par un chemin de passage pour le fluide, le boisseau (7) étant par ailleurs apte à tourner autour de l'axe central pour empêcher ou autoriser la circulation du fluide dans les conduites,
- un joint d'étanchéité interposé radialement entre le pourtour périphérique et le boisseau autour de chaque conduite, chaque joint d'étanchéité comportant :
- une ouverture centrale, traversante, munie d'un axe longitudinal, agencée dans le prolongement de la conduite pour autoriser la circulation du fluide à travers ledit joint d'étanchéité,
- un siège de joint agencé autour de l'ouverture centrale et ayant une première face tournée vers le boisseau, et
- une membrane déformable comportant une portion support fixée sur une deuxième face du siège de joint opposée à sa première face, et deux lèvres liées entre elles au niveau d'une jonction située au niveau d'un plan transversal, chaque lèvre étant agencée par rapport à la portion support de sorte à respectivement former une concavité,

le siège de joint définissant avec le boisseau un coefficient de frottement dynamique plus faible qu'un coefficient de frottement dynamique théorique de la membrane déformable avec le boisseau,
caractérisé en ce qu'une première concavité est orientée à l'opposé de l'ouverture centrale et une deuxième concavité est orientée vers l'ouverture centrale, lesdites lèvres étant aptes à se déplacer de sorte à bloquer de manière étanche le passage du fluide dans le chemin.

La vanne multivoies selon l'invention répond aux problématiques soulevées dans l'art antérieur. À cet égard, dans le joint d'étanchéité de la vanne multivoies selon l'invention, les lèvres et la portion support sont agencées de sorte à former des concavités orientées à l'opposé de l'ouverture centrale et vers l'ouverture centrale. Ainsi, le fluide qui circule dans le chemin en provenance des conduites autres que celle où ledit joint d'étanchéité est installé est apte à s'engouffrer dans la concavité afin de permettre aux lèvres de se déplacer et bloquer de manière étanche le passage du fluide dans le chemin. Dans ces conditions, la fermeture et l'étanchéité entre le chemin et la conduite sur laquelle est installé le joint d'étanchéité sont nettement améliorées.

En outre, la présence d'un siège de joint limite le couple de rotation du boisseau et, subséquemment limite, voire empêche que le joint d'étanchéité ne se déplace à chaque contact avec le boisseau. En effet, le siège de joint définit avec le boisseau un coefficient de frottement dynamique plus faible qu'un coefficient de frottement dynamique théorique de la membrane déformable avec le boisseau, ce qui limite le couple de rotation du boisseau. La durée de vie du joint d'étanchéité est donc significativement améliorée et le besoin d'intervention sur la vanne multivoies est considérablement réduit. Ceci est particulièrement important dans la mesure où une telle vanne multivoies peut comprendre une pluralité de joints d'étanchéité dont les durées de vie, quoique sensiblement similaires, peuvent néanmoins varier à l'usage, par exemple si une conduite est plus sollicitée qu'une autre. Cet avantage de l'invention est donc répliqué autant de fois qu'il y a de joints d'étanchéité dans la vanne multivoies.

Selon différentes caractéristiques de l'invention qui pourront être prises ensemble ou séparément :
- le joint d'étanchéité a une forme en X, le siège de joint comprenant deux bossages correspondant à deux des extrémités de la forme en X ;
- chaque lèvre comprend une extrémité libre, les extrémités libres des lèvres correspondent à deux autres des extrémités de la forme en X ;
- le siège de joint est fait d'une matière choisie parmi un polytétrafluoroéthylène (PTFE) vierge, un PTFE chargé de fibres de verre, un PTFE chargé de carbone, du polyfluorure de vinylidène (PVDF), du polyétheréthercétone (PEEK), du polyaryléthercétone (PEAK), du polyphtalamide (PPA), du polysulfure de phénylène (PPS), du polycaprolactame (PA6) et du polyamide 66 (PA66) ;
- la membrane déformable est faite d'une matière caoutchouc choisie parmi un éthylène-propylène-diène monomère (EPDM), un caoutchouc nitrile-butadiène hydrogéné (HNBR), un caoutchouc d'éthylène acrylate (AEM), un caoutchouc polyacrylique (ACM), un caoutchouc cellulaire silicone (VMQ), un caoutchouc nitrile (NBR), un caoutchouc de polyuréthane (PU) et un caoutchouc thermoplastique (TPE) ;
- le siège de joint présente une épaisseur comprise entre 0,05 mm et 1,5 mm, de préférence entre 0,1 mm et 0,5 mm ;
- chaque conduite comprend un accès au fluide depuis la zone d'interconnexion, et dans laquelle le pourtour périphérique comprend une butée située entre les accès de deux conduites adjacentes ;
- la butée est une bague de renfort formant les contours de l'accès ;
- la vanne comprend un segment de joints comportant une pluralité de joints d'étanchéité séparés les uns des autres par des portions amincies reliant lesdits joints d'étanchéité ;
- chaque joint d'étanchéité présente une forme générale incurvée de convexité orientée vers la conduite associée.

L'invention concerne en outre un système de gestion d'un fluide comprenant une vanne multivoies telle que précédemment décrite. Avantageusement, le système de gestion du fluide est un module de gestion thermique.

### Brève description des figures

D'autres objets, caractéristiques et avantages de l'invention apparaîtront plus clairement dans la description qui suit, faite en référence aux figures annexées, dans lesquelles :
- la figure 1 est une vue en perspective d'un distributeur adapté à une vanne multivoie selon l'invention ;
- la figure 2a est une vue en coupe transversale de la vanne multivoies selon un premier mode de réalisation de l'invention, ladite vanne multivoie comprenant le distributeur tel qu'illustré à la figure 1 ;
- la figure 2b est une vue rapprochée de la vanne multivoies illustrée sur la figure 2a ;
- la figure 3 illustre des vues en perspective du joint d'étanchéité utilisé dans la vanne multivoies illustrée aux figures 2a et 2b ;
- la figure 4 illustre schématiquement le joint d'étanchéité de la figure 3 lorsqu'il est à l'état assemblé (sans motif de remplissage) et lorsqu'il est à l'état assemblé sous pression du fluide à étancher (avec motif de remplissage) ;
- la figure 5 est une vue en coupe transversale de la vanne multivoies selon un deuxième mode de réalisation de l'invention ;
- la figure 6 illustre des vues en perspective du joint d'étanchéité de la figure 5 ;
- les figures 7a et 7b sont des vues en coupe transversale d'une vanne multivoies selon un troisième mode de réalisation de l'invention dans lesquelles un boisseau est positionné à deux endroits différents ;
- la figure 8 illustre schématiquement le joint d'étanchéité de la vanne multivoies des figures 7a et 7b lorsqu'il est à l'état assemblé (sans motif de remplissage) et lorsqu'il est assemblé sous pression du fluide à étancher (avec motif de remplissage) ;
- la figure 9 illustre des vues en perspective du joint d'étanchéité de la figure 8 ;
- la figure 10 est une vue en coupe transversale de la vanne multivoies selon un quatrième mode de réalisation de l'invention ;
- la figure 11 illustre des vues en perspective du joint d'étanchéité de la figure 10 ;
- la figure 12 illustre schématiquement la vanne multivoies selon une variante de réalisation de l'invention ;
- la figure 13a illustre une vanne multivoies selon l'invention dans une première configuration ;
- la figure 13b illustre une vanne multivoies selon l'invention dans une deuxième configuration.

### Description détaillée de l'invention

Nous allons maintenant décrire l'invention en référence aux figures annexées.

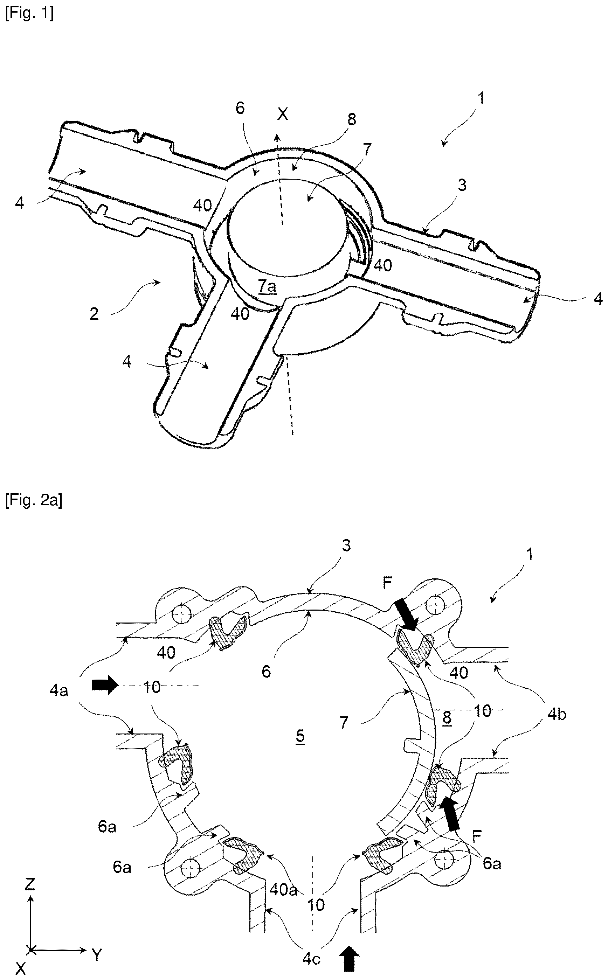

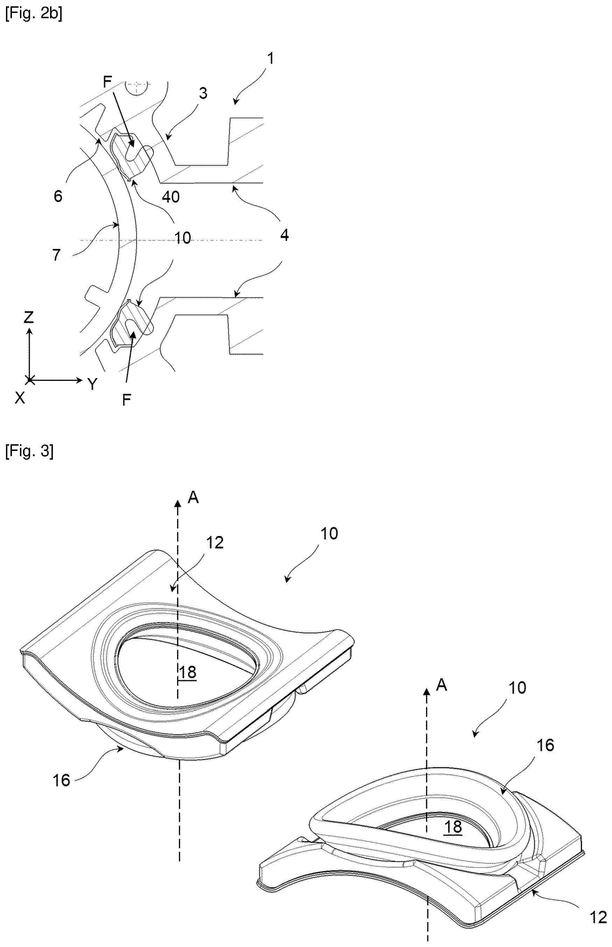

En référence aux figures 1 et 2b, l'invention concerne une vanne multivoies 1 pour un système de gestion d'un fluide F sous pression destinée à être installée dans un circuit de fluide. L'invention concerne également un système de gestion du fluide F (non illustré) comprenant une telle vanne multivoies.

Le fluide F utilisé dépend de l'usage qui doit être fait du circuit de fluide dans lequel le système de gestion du fluide est destiné à être utilisé. Par exemple, si le circuit de fluide est un circuit de refroidissement pour véhicule automobile alors le fluide F sera un liquide de refroidissement. Dans un tel circuit, la pression du fluide F peut atteindre 5 bars, si bien que les installations sont avantageusement configurées pour supporter une telle pression.

Le système de gestion du fluide a pour rôle de répartir le fluide entre différentes parties d'un même circuit de fluide ou entre différents circuits de fluide. À cet égard et tel qu'illustré à titre d'exemple sur la figure 1, il comprend une vanne multivoies munie d'un distributeur 2 comportant un corps 3, une zone d'interconnexion 5 munie d'un axe central X et un boisseau 7. Le système de gestion du fluide est par exemple un module de gestion thermique.

Le corps 3 est l'enveloppe extérieure du distributeur 2, ce qui lui permet de retenir le fluide F circulant dans le distributeur 2. Il a une pluralité de conduites 4 d'écoulement du fluide dont le nombre dépend du nombre de parties d'un même circuit ou de circuits à raccorder. Dans l'exemple de réalisation illustré sur la figure 1, les conduites 4 d'écoulement sont au nombre de trois. Elles sont agencées de sorte à donner au corps 3 une forme générale de T. Deux des conduites 4 sont agencées de sorte à former une barre transversale du T tandis que l'autre des conduites 4 est agencée de manière à former une barre longitudinale du T. Dans cet exemple de réalisation, cette dernière conduite 4 est donc sensiblement perpendiculaire aux deux autres conduites. Ce n'est pas la seule disposition envisageable puisque deux conduites 4 successives pourraient tout à fait faire un angle de 120°, si bien qu'on obtient sensiblement le même espacement entre les conduites 4. D'ailleurs, le nombre de conduites peut tout aussi bien être supérieur à deux.

Comme mentionné précédemment, le distributeur 2 comprend une zone d'interconnexion 5 pour lesdites conduites 4 d'écoulement munie de l'axe central X. Ainsi, la zone d'interconnexion 5 est située à la jonction entre les différentes conduites 4. Elle comporte un pourtour périphérique 6 formé par une surface intérieure de la zone d'interconnexion 5, c'est-à-dire la surface intérieure d'une paroi délimitant radialement la zone d'interconnexion 5. Dans l'exemple de réalisation illustré, le pourtour périphérique 6 présente une forme générale circulaire depuis laquelle s'étendent les différents conduites 4 d'écoulement du fluide. Ceci étant dit, l'invention n'est en rien limitée par une telle forme et, pour un distributeur de forme sphérique, le pourtour périphérique 6 peut également présenter une forme sphérique. Comme cela peut être compris, l'axe central X est situé au centre de la zone d'interconnexion 5. Dans l'exemple de réalisation illustré, cet axe central X s'étend de manière orthogonale à un fond de la zone d'interconnexion.

Le distributeur 2 comprend en outre un boisseau 7, placé dans la zone d'interconnexion 5 de sorte qu'une surface radialement externe 7a dudit boisseau 7 soit séparée du pourtour périphérique 6 par un chemin 8 de passage pour le fluide F. En pratique, c'est par ce chemin que passe le fluide F pour circuler d'une conduite 4 à l'autre. Comme précédemment mentionné, dans l'exemple de réalisation illustré, le pourtour périphérique 6 et le boisseau 7 présentent une forme cylindrique. Cela confère au chemin 8 une forme circulaire. Le boisseau 7 est apte à tourner autour de l'axe central X. Il est configuré pour empêcher ou autoriser la circulation du fluide F dans une ou plusieurs conduites 4 simultanément. À titre d'exemple le boisseau 7 peut empêcher la circulation du fluide dans une des conduites ou dans deux des conduites etc., quel que soit leur nombre, selon la configuration du distributeur 2. Dans l'exemple de réalisation illustré, le boisseau 7 présente une forme générale cylindrique, notamment la forme d'un cylindre creux. Il pourrait également prendre la forme d'un cylindre plein, d'un demi-cylindre, d'une sphère pleine ou encore d'une demi-sphère pleine sans préjudice pour la présente invention. L'intérêt d'une configuration plutôt qu'une autre dépend du nombre de conduites 4 dans le distributeur et du nombre de conduites 4 à obturer simultanément.

La vanne multivoies 1 comprend, un joint d'étanchéité 10 permettant d'étanchéifier une conduite 4, et permettant donc d'empêcher au fluide F d'accéder à la conduite 4. À cet égard, le joint d'étanchéité 10 est interposé radialement entre le pourtour périphérique 6 et le boisseau 7 autour de chaque conduite 4, et donc dans le chemin 8, ce qui lui permet d'assurer sa fonction d'étanchéité de la conduite 4 qui lui est associée. À ce propos, selon une mise en œuvre préférentielle, chaque conduite 4 comprend un accès 40 permettant au fluide F de pénétrer dans ladite conduite 4 depuis la zone d'interconnexion 5, le pourtour périphérique 6 comprenant une butée 6a située entre les accès 40 de deux conduites adjacentes. En pratique, l'accès 40 se situe au niveau d'une interface entre la zone d'interconnexion 5 et la conduite 4 associée à cet accès 40. Chaque butée 6a est placée de manière appropriée pour permettre un calage du joint d'étanchéité 10 correspondant et un maintien stable de celui-ci au niveau de l'interface entre la zone d'interconnexion 5 et la conduite 4. Il est possible de prévoir deux butées 6a entre des accès 40 selon les dimensions du joint d'étanchéité 10 par rapport à celles de la zone d'interconnexion 5. En alternative, il est possible de réaliser une unique butée, comme par exemple illustré à la figure 2a entre la barre transversale et la barre longitudinale du T.

Dans la configuration illustrée sur la figure 2a, le fluide F circule dans les conduites 4a, et 4c (Flèches). Pour rappel, le boisseau 7 est situé vis-à-vis de la conduite, ici la conduite 4b, dans laquelle on souhaite empêcher l'écoulement de fluide. Ainsi, la pression du fluide F est entrante pour les conduites 4a et 4c, mais aucun fluide ne circule dans la conduite 4b. Le fluide F arrivant depuis les conduites 4a et 4c, passe par le chemin 8 et exerce une pression, signalée par des flèches, sur le joint d'étanchéité. Le boisseau 7 présente la forme d'un demi-arc, ce qui lui permet d'obturer une unique conduite, ici la conduite 4b. Le fonctionnement est le suivant. Le fluide F provenant des conduites 4a et 4c est dirigé vers la conduite 4b. Concomitamment, le joint d'étanchéité 10 associé à la conduite 4b bloque le fluide venant des conduites 4a et 4c. Comme nous le verrons dans la suite de la présente description, un tel mode de fonctionnement du joint d'étanchéité 10 correspond à un mode de fonctionnement en pression extérieure.

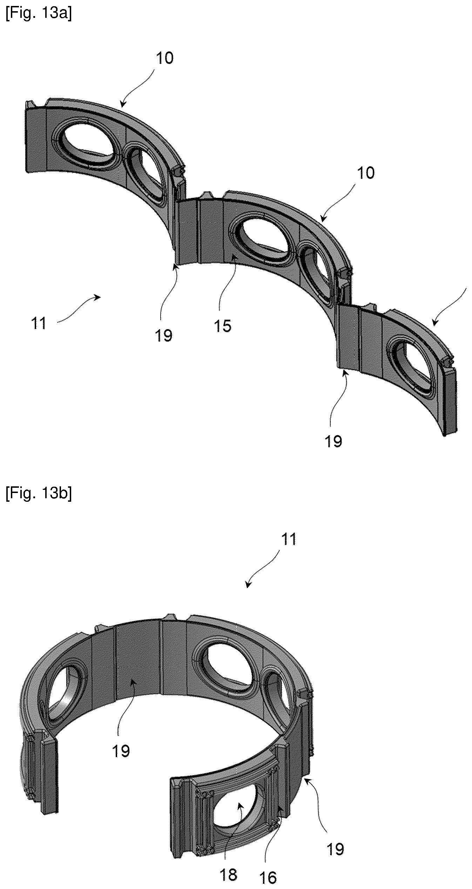

Comme ceci sera décrit dans la suite, la vanne multivoies 1 peut au regard de sa configuration comprendre une pluralité de joints d'étanchéité 10. Bien que chaque joint d'étanchéité 10 puisse être fourni sous la forme d'un unique joint, il est plus avantageux, notamment lorsque le nombre de conduites est supérieur ou égal à quatre, de réaliser un segment de joint 11 regroupant une pluralité de joints d'étanchéité 10. Dans ce cas, chaque joint d'étanchéité 10 du segment de joints 11 est apte à remplir la fonction d'étanchéité indépendamment des autres joints d'étanchéité 10. L'intérêt du segment de joints est de former un ensemble unitaire et solidaire dont la fabrication et l'installation sont simplifiées. Cela sera mieux décrit dans la suite en référence à la figure 13a et à la figure 13b.

Chaque joint d'étanchéité 10 comprend un siège de joint 12, une membrane déformable 14 fixée au siège de joint 12, et une ouverture 18 centrale traversant le siège de joint 12 et la membrane déformable 14. La figure 3 est une vue en perspective du joint d'étanchéité 10 utilisé dans la vanne multivoies 1 selon ce premier mode de réalisation de l'invention et telle qu'illustrée sur les figures 1, 2a et 2b. Dans le mode de réalisation illustré, le joint d'étanchéité 10 présente une forme générale parallélépipédique et une forme incurvée dont la convexité est orientée vers la conduite 4 associée. Cette courbure du joint d'étanchéité 10 lui permet avantageusement d'épouser les contours du pourtour périphérique 6. D'autres formes de joint d'étanchéité sont envisageables selon la forme du pourtour périphérique 6 et l'invention n'est pas limitée à une quelconque forme. La figure 3 illustre le siège de joint 12, la membrane déformable 14 et l'ouverture 18.

L'ouverture 18 centrale, traversante, munie d'un axe longitudinal A, est agencée dans le prolongement de la conduite 4 pour autoriser la circulation du fluide à travers ledit joint d'étanchéité 10.

Dans le cadre de l'invention, le siège de joint 12 définit avec le boisseau 7 un coefficient de frottement dynamique plus faible qu'un coefficient de frottement dynamique théorique de la membrane déformable 14 avec le boisseau 7, notamment la surface externe 7a du boisseau, ce qui permet de réduire le couple de rotation du boisseau 7, et donc les frottements entre le boisseau 7 et le joint d'étanchéité 10. Le faible coefficient de frottement dynamique du boisseau 7 avec le siège de joint 12 peut être dû à la faible rugosité de la première face 12a du siège de joint, de la nature du matériau, etc. Il convient de souligner que le coefficient de frottement dynamique théorique de la membrane déformable 14 avec le boisseau 7 peut être prédéterminé par une mesure au moyen d'un échantillon ne comportant pas le siège de joint 12.

Le siège de joint 12 est agencé autour de l'ouverture centrale 18. Il comprend une première face 12a tournée vers le boisseau 7, et une deuxième face 12b, opposée à la première face 12a, sur laquelle est fixée la membrane déformable 14. La première face 12a du siège de joint, tournée vers le boisseau 7, est aussi destinée à être directement en contact avec le boisseau 7, ce qui n'est pas le cas de la deuxième face 12b. La première face 12a est donc la face fonctionnelle du siège de joint 12 du point de vue du couplage en rotation du boisseau 7, tandis que la deuxième face 12b sert à la fixation de la membrane déformable 14.

À ce stade précisons que la membrane déformable 14 peut être fixée au siège de joint 12 par tout procédé connu de l'homme du métier, par exemple par collage, thermocollage, etc. Selon une mise en œuvre particulière de l'invention, la membrane déformable 14 est fixée au siège de joint 12 au moyen d'un adhésif thermocollant. L'adhésif thermocollant peut à titre d'exemple être un copolymère d'éthylène et d'acide acrylique (Ethylene Acrylic Acid copolymer (EAA) en anglais) ou tout autre composé ayant d'excellentes propriétés de collage.

Dans les modes de réalisation illustrés sur les figures, la membrane déformable 14 présente des dimensions radiales, i.e. une épaisseur, nettement plus élevées que celles du siège de joint 12. En effet, le siège de joint 12 se présente sous la forme d'un film ou d'une couche ayant une épaisseur définie le long d'un axe radial et, concomitamment, la membrane déformable 14 présente une dimension d'un ordre de grandeur plus élevé que le siège de joint 12 le long de cet axe radial. À ce propos, le siège de joint 12 peut d'ailleurs comporter une pluralité de couches. Dans ce cas, le siège de joint 12 comporte, de préférence, deux couches, à savoir une première couche, fixée à la membrane déformable 14, qui sert à la rigidification du joint d'étanchéité 10, et une deuxième couche, fixée à la première couche, qui sert à limiter substantiellement le couple de rotation du boisseau 7. À cet égard, et dans cette variante de réalisation, la deuxième couche présente avantageusement un faible coefficient de frottement dynamique avec le boisseau 7 en comparaison d'un coefficient de frottement dynamique théorique de la de la membrane déformable 14 avec le boisseau 7. Par exemple, la première couche est en PTFE tandis que la deuxième couche est en caoutchouc.

La membrane 14 est déformable sous la pression du fluide F circulant dans le système de gestion de fluide. Comme déjà indiqué, le fluide F peut être porté à des pressions comprises entre 0,1 et 5 bars, ce qui suffit à permettre une déformation de la membrane 14. À ce stade, précisons que l'on entend par « déformable » la capacité intrinsèque de la membrane à changer de forme sous l'effet d'une contrainte par rapport à sa forme à l'état libre. On entend par « état libre », l'état de la membrane 14 lorsqu'aucune contrainte ne s'exerce sur elle. La déformabilité de la membrane 14 tient essentiellement dans les propriétés élastiques de la matière ou des matières dont est faite la membrane, et donc dans la nature de la matière ou des matières utilisée(s). Ainsi, au moins une partie de la membrane déformable 14 est apte à se déplacer sous l'action du fluide.

Dans le cadre de l'invention, la membrane déformable 14 comprend une portion support 15, fixée sur la deuxième face 12b du siège de joint, et au moins une lèvre 16 agencée par rapport à la portion support 15 de sorte à former une concavité 17 orientée à l'opposé de l'ouverture centrale 18. La portion support 15 fournit à la fois une assise pour la lèvre 16 tout en conférant une surface pour la fixation mécanique de la membrane déformable 14 au siège de joint 12. La lèvre 16, quant à elle, représente la partie active de la membrane déformable 14. En effet, lorsque le fluide F pénètre dans la concavité 17, la pression exercée par celui-ci sur la lèvre 16 a pour conséquence de permettre le déplacement de ladite lèvre 16 d'une position de précontrainte, tel qu'illustré sur la vue rapprochée de la figure 2b, à une position contrainte. Sur les figures 2b, 8 et 10 la portion support 15 présente, à son extrémité libre, une saillie dont il ne faut pas tenir compte.

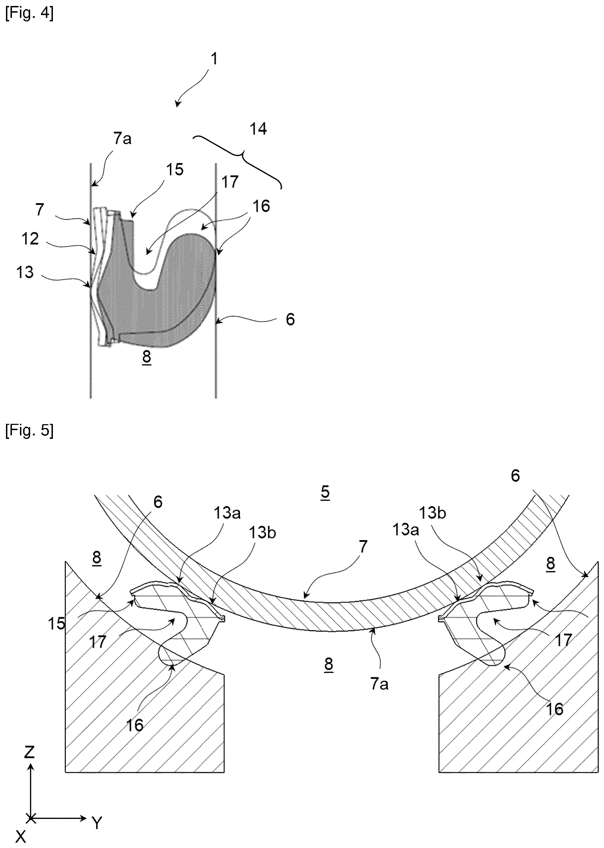

La figure 4 illustre le passage du joint d'étanchéité 10 d'un état assemblé, dans lequel la lèvre 16 est dans la position de précontrainte, à un état assemblé sous pression, dans lequel la lèvre 16 est dans la position de contrainte, le joint d'étanchéité 10 étant sans motif de remplissage dans l'état assemblé tandis qu'il présente un motif de remplissage dans l'état assemblé sous pression. Il convient de noter que lorsque le joint d'étanchéité 10 est dans l'état assemblé, des extrémités libres de la lèvre 16 et de la portion support 15 sont plus rapprochées l'une de l'autre en comparaison de leur écartement lorsque le joint d'étanchéité 10 est à l'état libre. Sur la figure 2a, les joints d'étanchéité 10 sont illustrés à l'état libre, bien qu'ils soient en réalité à l'état assemblé. Sur cette figure, comme sur les figures 2b, 5, 7a, 7b, 8, 10 et 12, les joints d'étanchéité 10 sont illustrés à l'état libre bien qu'ils soient en réalité à l'état assemblé. Ainsi, leurs lèvres 16, 16a, 16b respectives ne devraient pas dépasser et traverser le pourtour périphérique 6 tel qu'illustré sur ces figures mais être illustrées en position de précontrainte, et donc épouser la forme du pourtour périphérique 6, comme visible sur la figure 4.

Lorsque la lèvre 16 est en position de précontrainte, la précontrainte exercée par le pourtour périphérique 6 sur l'extrémité libre de la lèvre donne lieu à un contact quasi ponctuel entre ladite extrémité libre et le pourtour périphérique 6. Cette position de précontrainte correspond à l'état assemblé du joint d'étanchéité 10, comme indiqué précédemment. Lorsque la lèvre 16 est en position de contrainte et qu'elle se déforme, la surface de contact entre l'extrémité libre de la lèvre et le pourtour périphérique 6 augmente car la lèvre 16 s'aplatit sur le pourtour périphérique 6. C'est ce qui permet d'avoir une étanchéité améliorée entre la lèvre 16 et le pourtour périphérique 6. Cette position de contrainte correspond à l'état assemblé sous pression du joint d'étanchéité 10, comme indiqué précédemment. Ce mode de fonctionnement correspond à un mode de fonctionnement « en pression extérieure » du joint d'étanchéité 10. En effet, le joint d'étanchéité 10 remplit sa fonction d'étanchéité grâce à la pression du fluide F venant des autres conduites ou l'une des autres conduites que celle où ledit joint d'étanchéité est installé.

Il convient de souligner que la position de précontrainte permet d'étanchéifier l'interface entre le joint d'étanchéité 10 et le pourtour périphérique 6, mais cette étanchéité n'est pas suffisante pour un fluide F sous pression.

La concavité 17 joue un rôle essentiel dans ce mouvement puisqu'étant orientée à l'opposé de l'ouverture centrale 18, elle s'oppose à l'écoulement du fluide F circulant dans le chemin 8 et génère des pressions dans l'écoulement du fluide F qui sont à l'origine du déplacement de la lèvre 16. En effet, le fluide exerce une pression en tout point de la concavité 17, ce qui provoque une déformation et une hausse de la pression localement sur la lèvre 16. Ainsi, plus la pression du fluide F est élevée plus les pressions fluidiques se produisant au sein de la concavité 17 sont fortes et donc plus la pression exercée sur la lèvre 16 est élevée. Autrement dit, le joint d'étanchéité 10 de la vanne multivoies selon l'invention réalise un asservissement à la pression du fluide F puisque la réalisation de l'étanchéité est directement corrélée à la pression exercée par le fluide F sur le joint d'étanchéité 10, notamment sur la concavité 17. Le seuil précité dépend bien évidemment des matières choisies, des dimensions de la concavité et tout autre paramètre influençant la déformation de la lèvre 16.

En comparaison des vannes multivoies connues de l'art antérieur, l'invention améliore donc l'étanchéité obtenue au niveau de la conduite. De plus, comme le siège de joint 12 limite le couple de rotation du boisseau 7, une bonne étanchéité peut être préservée pour une longue durée. En outre, la solution proposée par l'invention est peu onéreuse en comparaison de certaines solutions de l'art antérieur, notamment celles proposant deux pièces dont l'une est métallique.

Selon une mise en œuvre préférentielle, le siège de joint 12 comporte un bossage 13 qui permet d'assurer l'étanchéité du joint d'étanchéité 10 à l'interface entre ce dernier et le boisseau 7. Le bossage unique 13 permet d'améliorer l'étanchéité à l'interface entre le joint d'étanchéité 10 et le boisseau 7, et d'assurer la stabilité autour du point de contact avec le boisseau 7, en particulier lorsque le joint d'étanchéité est utilisé à basse pression, c'est-à-dire à des pressions inférieures ou égales à 3 bars. De préférence, le bossage 13 est orienté vers le boisseau 7, c'est-à-dire qu'une saillie formée par le bossage 13 est orientée vers le boisseau 7. Ainsi, dès la position de précontrainte, et encore plus dans la position de contrainte, le bossage 13 exerce une contrainte sur le boisseau 7, et cette contrainte permet d'étanchéifier l'interface entre le joint d'étanchéité 10 et le boisseau 7.

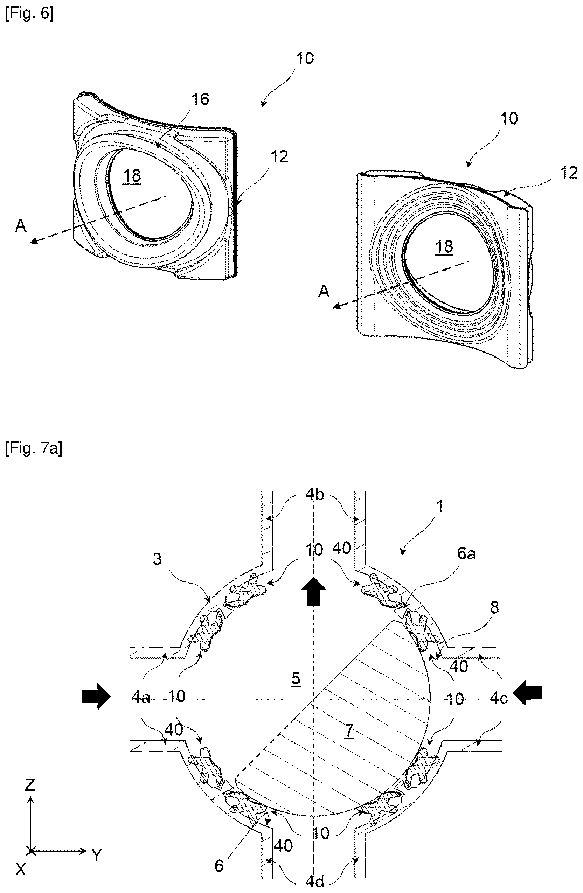

En référence aux figures 5 et 6, selon un deuxième mode de réalisation qui représente une variante de mise en œuvre du premier mode de réalisation, la membrane déformable 14 comprend toujours une lèvre 16, toutefois le siège de joint 12 comprend deux bossages 13a et 13b. L'utilisation de deux bossages 13a et 13b au lieu d'un seul bossage 13, comme cela a été vu dans le premier mode de réalisation, permet d'améliorer encore plus l'étanchéité à l'interface entre le joint d'étanchéité 10 et le boisseau 7 tout en s'assurant de la stabilité autour du point de contact avec le boisseau 7, à basse pression comme à haute pression, c'est-à-dire à des pressions supérieures à 2 bars et inférieures à 5 bars. Cela permet également d'éviter une usure prématurée de l'autre côté du joint d'étanchéité 10. À l'instar du premier mode de réalisation, la membrane déformable 14 continue d'assurer cette fonction d'étanchéification à l'interface entre le joint d'étanchéité 10 et le pourtour périphérique 6.

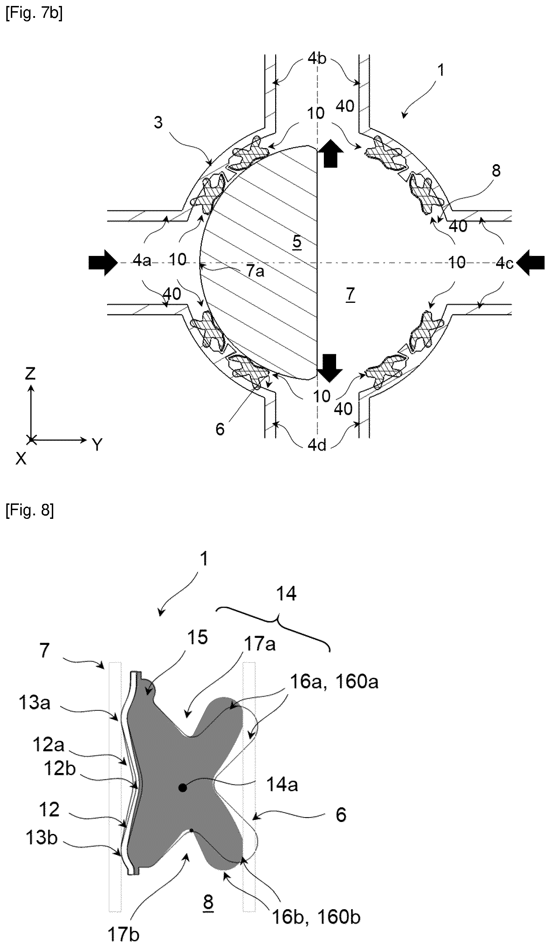

En référence aux figures 7a et 7b, selon un troisième mode de réalisation, la membrane déformable 14 comprend deux lèvres 16a, 16b, par exemple sensiblement asymétriques par rapport à un plan P1 transversal du joint d'étanchéité. Une première concavité 17a est orientée à l'opposé de l'ouverture centrale 18 et une deuxième concavité 17b est orientée vers l'ouverture centrale 18. Chaque concavité 17a, 17b s'oppose à l'écoulement du fluide F circulant dans le chemin 8 et génère des pressions dans l'écoulement du fluide F, pressions qui sont à l'origine du déplacement des lèvres 16a, 16b. Selon cette variante de réalisation, les lèvres 16 sont liées entre elles au niveau d'une jonction 14a située au niveau du plan P1 transversal. Chaque lèvre 16a, 16b est agencée par rapport à la portion support 15 de sorte à former une concavité 17a, 17b telle que celle précédemment décrite en référence au premier mode de réalisation. Ainsi, chaque lèvre 16a, 16b peut, indépendamment de l'autre, se déplacer et venir en appui étanche sur le pourtour périphérique 6 lorsque le fluide F exerce une pression sur la concavité 17a, 17b associée, c'est-à-dire lorsque les lèvres 16a, 16b se déplacent, elles bloquent de manière étanche le passage du fluide dans le chemin 8.

Une vanne multivoies 1 selon ce mode de réalisation de l'invention est particulièrement avantageuse. En effet, dans ce mode de réalisation, le joint d'étanchéité 10 remplit une fonction d'étanchéité aussi bien pour le fluide F arrivant par le chemin 8 en provenance des autres conduites 4 que celle associée à ce joint d'étanchéité que pour le fluide F arrivant par le chemin 8 en provenance de la conduite associée à ce joint d'étanchéité 10. C'est la position du boisseau 7 et la conduite 4 de provenance du fluide F qui déterminent le mode de fonctionnement du joint d'étanchéité. Le mode de fonctionnement dans lequel le joint d'étanchéité 10 remplit une fonction d'étanchéité pour le fluide F arrivant par le chemin 8 en provenance des autres conduites 4 que celle associée à ce joint d'étanchéité correspond à un mode de fonctionnement « en pression extérieure » du joint d'étanchéité. Le mode de fonctionnement dans lequel le joint d'étanchéité 10 remplit une fonction d'étanchéité pour le fluide F arrivant par le chemin 8 en provenance de la conduite associée à ce joint d'étanchéité correspond à un mode de fonctionnement « en pression intérieure » du joint d'étanchéité.

Dans la configuration illustrée sur la figure 7a, le fluide F circule dans les conduites 4a, 4b et 4c (Flèches). La pression du fluide F est entrante pour les conduites 4a et 4c, et aucun fluide ne circule dans la conduite 4d. Le boisseau 7 présente la forme d'un demi-cylindre, ce qui lui permet d'obturer jusqu'à deux conduites 4 simultanément. Le boisseau 7 obture donc simultanément les conduites 4c et 4d. Le fonctionnement est le suivant. Le fluide F provenant de la conduite 4a est dirigé vers la conduite 4b. Concomitamment, le joint d'étanchéité 10 associé à la conduite 4c bloque le fluide F venant de la conduite 4c et adopte un mode de fonctionnement en pression intérieure et extérieure. Quant au joint d'étanchéité associé à la conduite 4d, il bloque le fluide venant de la conduite 4a et adopte ainsi un mode de fonctionnement en pression extérieure.

Dans la configuration illustrée sur la figure 7b, le fluide F circule dans toutes les conduites, et donc les conduites 4a, 4b, 4c, 4d (Flèches). Comme dans l'exemple de mise en œuvre de la figure 7a, la pression du fluide F est entrante pour les conduites 4a et 4c. Le boisseau 7 présente la forme d'un demi-cylindre, ce qui lui permet d'obturer jusqu'à deux conduites. Toutefois, dans le cas d'espèce, le boisseau 7 est disposé de manière à n'obturer que la conduite 4a. Ceci mène au mode de fonctionnement ci-après exposé. Le fluide F qui pénètre dans la zone d'interconnexion 5 en provenance de la conduite 4c est dirigé vers les conduites 4b et 4d, qui ne sont pas obturées par le boisseau 7. Le joint d'étanchéité 10 associé à la conduite A adopte deux modes de fonctionnement. Il fonctionne en pression intérieure pour bloquer le fluide F provenant de la conduite 4a et fonctionne en pression extérieure pour bloquer le fluide F provenant de la conduite 4c.

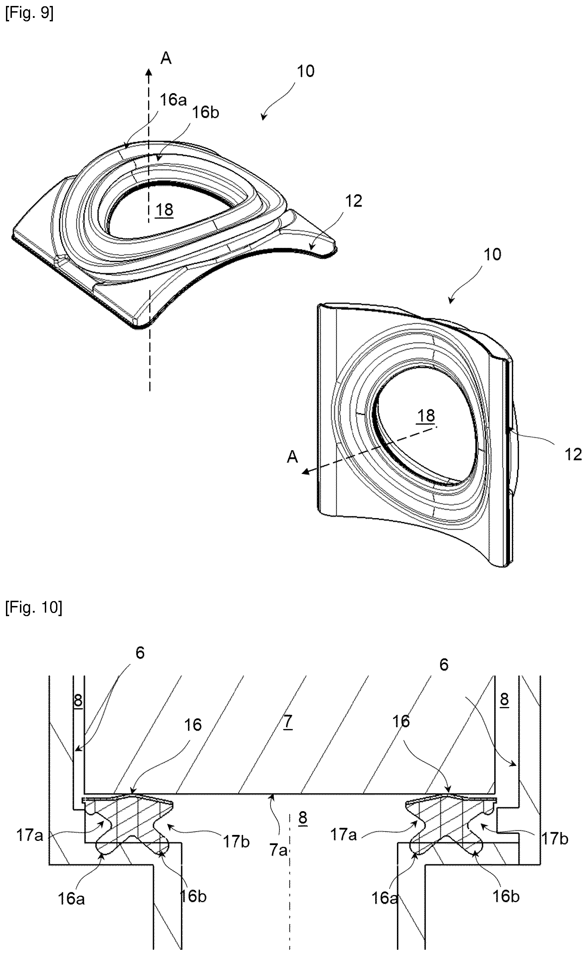

Le troisième mode de réalisation est donc particulièrement avantageux en ce qu'il permet d'assurer l'étanchéité pour toutes les configurations possibles. En référence aux figures 8 et 9, nous allons plus précisément décrire le principe à la base de cette double étanchéité. Dans ce mode de réalisation comme dans le premier et le deuxième, c'est l'interaction du fluide F avec les concavités 17a et 17b qui est à l'origine du passage des lèvres 16a et 16b de la position de précontrainte, dans laquelle le joint d'étanchéité 10 est sans motif de remplissage, à une position de contrainte dans laquelle le joint d'étanchéité 10 présente un motif de remplissage plein. C'est donc cela qui est à l'origine du déplacement des lèvres 16a et 16b de la membrane 14. Lorsque la pression exercée par le fluide F sur la concavité 17a augmente, cela provoque une déformation de la lèvre 16a qui s'aplatit sur le pourtour périphérique 6. Cela ferme le chemin 8 de manière étanche au fluide F pénétrant dans la concavité 17a. De même, lorsque la pression exercée par le fluide F sur la concavité 17b augmente, la lèvre 16b s'aplatit sur le pourtour périphérique 6, ce qui ferme le chemin 8 de manière étanche au fluide F pénétrant dans la concavité 17b.

Lorsqu'un flux de fluide sous pression arrive des deux côtés du joint d'étanchéité 10, ces deux mécanismes d'étanchéification se produisent donc de manière simultanée, les lèvres s'aplatissant en s'écartant donc l'une de l'autre. Toutefois, ces mécanismes peuvent opérer indépendamment et peuvent donc se produire à des instants différents. Dans ce mode de réalisation, le joint d'étanchéité 10 de la vanne multivoies 1 selon l'invention est donc apte à réaliser un asservissement à la pression extérieure et intérieure exercée par le fluide F.

Toujours en référence aux figures 8 et 9 et de manière particulièrement avantageuse, le joint d'étanchéité 10 a une forme en X, dans laquelle deux extrémités de ladite forme en X correspondent à deux bossages 13a, 13b du siège 12 de joint. Ces bossages 13a, 13b ont la même fonction d'étanchéité que les bossages 13a, 13b décrits en référence au deuxième mode de réalisation. En outre, deux autres des extrémités de cette forme en X correspondent à chacune des extrémités libres 160a, 160b des lèvres 16a, 16b. De préférence, les deux bossages 13a, 13b sont sensiblement alignés radialement avec les extrémités libres 160a, 160b des lèvres. Plus précisément, un premier bossage 13a sensiblement aligné radialement avec l'extrémité libre 160a d'une première lèvre 16a et un deuxième bossage 13b sensiblement aligné radialement avec l'extrémité libre 160b d'une deuxième lèvre 16b. Ceci étant dit, un écart d'au plus 10° peut exister par rapport à une médiatrice.

Cette configuration est très avantageuse parce qu'elle permet d'améliorer substantiellement la stabilité mécanique du joint d'étanchéité 10 dans tous les modes de fonctionnement, à savoir en mode de fonctionnement pression extérieure seule, en mode de fonctionnement pression intérieure seule, en mode de fonctionnement pression extérieure et intérieure. En effet, si le fluide F n'exerce une pression que sur l'une des concavités 17a, 17b, le bossage 13b, 13a aligné radialement avec l'extrémité libre de la lèvre associée à l'autre concavité 17b, 17a fonctionne comme un point de contact annulaire qui empêche au joint d'étanchéité 10 de basculer.

À ce stade, il convient de noter que si le joint d'étanchéité 10 ne comprend qu'un bossage 13 unique, par exemple situé dans l'alignement radial de la jonction 14a, il est amené à basculer lorsque le fluide F n'exerce de pression que sur l'une des concavités du joint d'étanchéité 10, ce qui entraîne un délestage et donc une perte de pression de contact du côté du siège de joint 12. En effet, les surfaces laissées libres entre ce bossage unique et des bords du siège de joint 12 seraient trop importantes, ce qui diminuerait les pressions de contact et dégraderait l'étanchéité. Il peut en revanche survenir un basculement du joint d'étanchéité lorsque la pression exercée sur la concavité 17a, 17b est très différente de la pression exercée sur l'autre des concavités 17b, 17a.

À ce propos et de manière avantageuse, le premier 13a et le deuxième 13b bossages sont configurés pour former respectivement un contact ponctuel annulaire avec le boisseau 7. Cela favorise l'équilibrage des pressions de chaque côté du joint d'étanchéité 10 en comparaison à une situation où le contact serait substantiellement plan, ce qui améliore substantiellement l'étanchéité et diminue le frottement.

De manière très avantageuse, la première face 12a du siège de joint est faite en polytétrafluoroéthylène (PTFE). Le PTFE présente une bonne résistance aux agressions chimiques et thermiques, ce qui le rend particulièrement indiqué pour les usages envisagés dans le cadre de la présente invention. En outre, il présente un coefficient de frottement dynamique faible, ce qui réduit les frottements avec les surfaces antagonistes. Cette propriété le rend utile à un usage dans un joint d'étanchéité 10 tel que celui de la vanne multivoies 1 du premier mode de réalisation mais encore plus particulièrement dans un joint d'étanchéité 10 tel que celui de la vanne multivoies 1 du troisième mode de réalisation. En effet, dans ce dernier cas, la première face 12a du siège de joint présente une aire beaucoup plus élevée que celle du siège de joint 12 du premier mode de réalisation, et donc une surface potentielle de frottement plus élevée. L'utilisation d'un siège de joint 12 en PTFE permet de réduire significativement les frottements entre la première face 12a du siège de joint et le boisseau 7, ce qui limite le couple de rotation du boisseau 7.

De préférence, le siège de joint 12 est fait d'une matière choisie parmi le PTFE vierge, le PTFE chargé de fibres de verre, le PTFE chargé de carbone, du polyfluorure de vinylidène (PVDF), du polyétheréthercétone (PEEK), du polyaryléthercétone (PEAK), du polyphtalamide (PPA), du polysulfure de phénylène (PPS), du polycaprolactame (PA6) et du polyamide 66 (PA66). Le PTFE chargé de fibres de verre et le PTFE chargé de carbone ont une meilleure résistance à l'usure et une meilleure stabilité dimensionnelle que le PTFE vierge. Ils sont donc préférés au PTFE vierge car ils permettent d'améliorer la durée de vie du joint d'étanchéité 10.

Selon une mise en œuvre particulière qui peut être implémentée dans tous les modes de réalisation, la membrane déformable 14 est faite d'une matière choisie parmi un éthylène-propylène-diène monomère (EPDM), un caoutchouc nitrile-butadiène hydrogéné (HNBR), un caoutchouc d'éthylène acrylate (AEM), un caoutchouc polyacrylique (ACM), un caoutchouc cellulaire silicone (VMQ), un caoutchouc nitrile (NBR), un caoutchouc de polyuréthane (PU) et un caoutchouc thermoplastique (TPE). En pratique, le matériau choisi dépend essentiellement de l'application visée. L'EPDM et l'HNBR sont particulièrement indiqués pour une utilisation du joint d'étanchéité 10 dans un module de gestion thermique d'un fluide de refroidissement. Ceci étant dit, pour des applications « huile », il est préférable que la membrane déformable 14 soit faite en caoutchouc AEM ou ACM.

De manière avantageuse, le siège de joint 12 présente une épaisseur comprise entre 0,05 mm et 1,5 mm, de préférence entre 0,1 mm et 0,5 mm, ce qui permet de trouver un compromis entre l'obtention d'un siège de joint 12 ayant une tenue mécanique suffisante et l'encombrement radial du joint d'étanchéité 10.

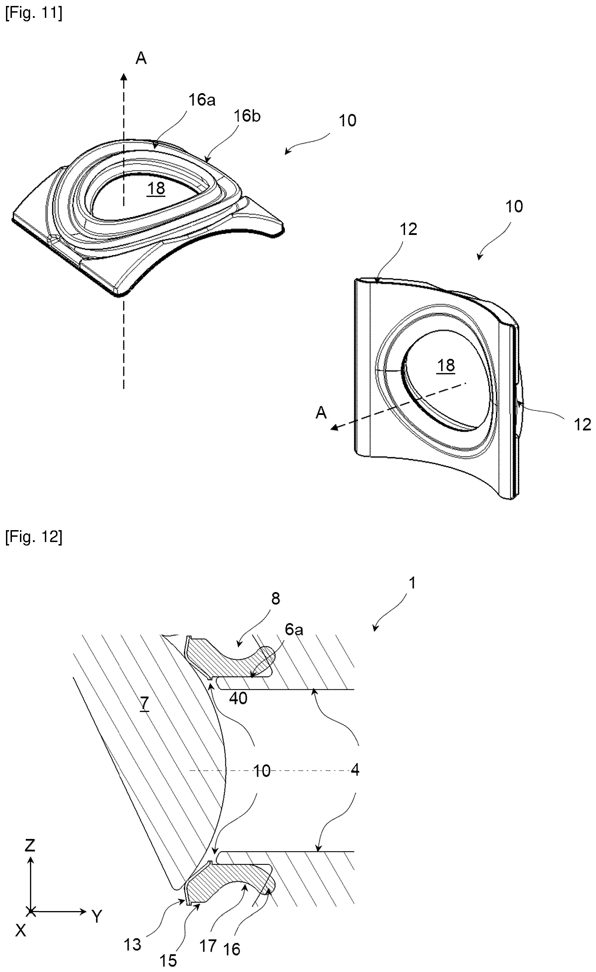

En référence aux figures 10 et 11, selon un quatrième mode de réalisation qui représente une variante de mise en œuvre du troisième mode de réalisation, la membrane déformable 14 comprend toujours deux lèvres 16a et 16b, toutefois le siège de joint 12 comprend un bossage 13. Le joint d'étanchéité 10 de la vanne multivoies selon ce mode de réalisation est particulièrement avantageux en ce qu'il permet d'améliorer encore plus l'étanchéité que celui avec les deux bossages 13a, 13b en cas d'assemblage imprécis (hyperstatisme).

Selon une mise en œuvre particulière illustrée sur la figure 12, la butée 6a est une bague de renfort formant les contours de l'accès 40. Une telle disposition permet d'éviter tout risque de flambage du joint d'étanchéité 10 sur son diamètre intérieur, notamment sur des contours de l'ouverture 18.

Comme déjà mentionné précédemment, le corps 3 du distributeur forme une pluralité de conduites 4. Dans les exemples de réalisation décrits le distributeur 2 comprend trois à quatre conduites 4. Ceci étant dit, il peut comprendre au moins deux conduites. À cet égard, la vanne multivoies 1 peut comprendre un segment de joints 11 comportant une pluralité de joints d'étanchéité 10 séparés les uns des autres par des portions amincies 19 reliant lesdits joints d'étanchéité 10. Un tel exemple de réalisation est illustré aux figures 13a et 13b. Ainsi, une pluralité de conduites 4 peuvent être étanchéifiées au moyen d'un unique segment de joint 11 comprenant une pluralité de joints d'étanchéité 10. Les portions amincies 19 reliant les joints d'étanchéité 10 permettent d'adapter la forme générale du segment de joints 11 à celle du pourtour périphérique 6. Ainsi, il reste possible de réaliser la fabrication du segment de joints 11 à plat tout en tenant compte de la géométrie du distributeur 2.

Les configurations montrées aux figures citées ne sont que des exemples possibles, nullement limitatifs, de l'invention qui englobe au contraire les variantes de conceptions à la portée de l'homme de l'art.

## Revendications

1. Vanne multivoies (1) comprenant :
- un distributeur (2) comportant un corps (3) avec une pluralité de conduites (4) d'écoulement du fluide (F), une zone d'interconnexion (5) pour lesdites conduites (4), munie d'un axe central (X), comportant un pourtour périphérique (6), et un boisseau (7), placé dans la zone d'interconnexion (5) de sorte qu'une surface radialement externe dudit boisseau (7) soit séparée du pourtour périphérique (6) par un chemin (8) de passage pour le fluide (F), le boisseau (7) étant par ailleurs apte à tourner autour de l'axe central (X) pour empêcher ou autoriser la circulation du fluide (F) dans les conduites (4),
- un joint d'étanchéité (10) interposé radialement entre le pourtour périphérique (6) et le boisseau (7) autour de chaque conduite (4), chaque joint d'étanchéité (10) comportant :
- une ouverture (18) centrale, traversante, munie d'un axe longitudinal (A), agencée dans le prolongement de la conduite (4) pour autoriser la circulation du fluide à travers ledit joint d'étanchéité (10),
- un siège (12) de joint agencé autour de l'ouverture centrale (18) et ayant une première face (12a) tournée vers le boisseau (7), et
- une membrane (14) déformable comportant une portion support (15) fixée sur une deuxième face (12b) du siège de joint opposée à sa première face (12a), et deux lèvres (16a, 16b) liées entre elles au niveau d'une jonction (14a) située au niveau d'un plan (P1) transversal, chaque lèvre (16a, 16b) étant agencée par rapport à la portion support (15) de sorte à respectivement former une concavité (17a, 17b),
le siège (12) de joint définissant avec le boisseau (7) un coefficient de frottement dynamique plus faible qu'un coefficient de frottement dynamique théorique de la membrane déformable (14) avec le boisseau (7),
**caractérisé en ce qu'**une première concavité (17a) est orientée à l'opposé de l'ouverture centrale (18) et une deuxième concavité (17b) est orientée vers l'ouverture centrale (18), lesdites lèvres (16a, 16b) étant aptes à se déplacer de sorte à bloquer de manière étanche le passage du fluide dans le chemin (8).

2. Vanne multivoies (1) selon la revendication 1, dans laquelle le joint d'étanchéité (10) a une forme en X, le siège (12) de joint comprenant deux bossages (13a, 13b) correspondant à deux des extrémités de la forme en X.

3. Vanne multivoies (1) selon l'une quelconque des revendications précédentes, dans laquelle le siège (12) de joint est fait d'une matière choisie parmi un polytétrafluoroéthylène (PTFE) vierge, un PTFE chargé de fibres de verre, un PTFE chargé de carbone, du polyfluorure de vinylidène (PVDF), du polyétheréthercétone (PEEK), du polyaryléthercétone (PEAK), du polyphtalamide (PPA), du polysulfure de phénylène (PPS), du polycaprolactame (PA6) et du polyamide 66 (PA66).

4. Vanne multivoies (1) selon l'une quelconque des revendications précédentes, dans laquelle la membrane (14) déformable est faite d'une matière caoutchouc choisie parmi un éthylène-propylène-diène monomère (EPDM), un caoutchouc nitrile-butadiène hydrogéné (HNBR), un caoutchouc d'éthylène acrylate (AEM), un caoutchouc polyacrylique (ACM), un caoutchouc cellulaire silicone (VMQ), un caoutchouc nitrile (NBR), un caoutchouc de polyuréthane (PU) et un caoutchouc thermoplastique (TPE).

5. Vanne multivoies (1) selon l'une quelconque des revendications précédentes, dans laquelle le siège (12) de joint présente une épaisseur comprise entre 0,05 mm et 1,5 mm, de préférence entre 0,1 mm et 0,5 mm.

6. Vanne multivoies (1) selon l'une quelconque des revendications précédentes, dans laquelle chaque conduite (4) comprend un accès (40) au fluide (F) depuis la zone d'interconnexion (5), et dans laquelle le pourtour périphérique (6) comprend une butée (6a) située entre les accès (40) de deux conduites (4) adjacentes.

7. Vanne multivoies (1) selon la revendication 6, dans laquelle la butée (6a) est une bague de renfort formant les contours de l'accès (40).

8. Vanne multivoies (1) selon l'une quelconque des revendications précédentes, comprenant un segment de joints (11) comportant une pluralité de joints d'étanchéité (10) séparés les uns des autres par des portions amincies (19) reliant lesdits joints d'étanchéité (10).

9. Vanne multivoies (1) selon la revendication 8, dans laquelle chaque joint d'étanchéité (10) présente une forme générale incurvée de convexité orientée vers la conduite (4) associée.

10. Système de gestion d'un fluide (F) comprenant une vanne multivoies (1) selon l'une quelconque des revendications précédentes.

11. Système selon la revendication 10, dans laquelle le système de gestion du fluide est un module de gestion thermique.
